# EUROPEAN PATENT SPECIFICATION

(11) **EP 1 965 947 B1**
(45) Date of publication and mention of the grant of the patent: **11.05.2011**
(21) Application number: 06818146.0
(22) Date of filing: 05.12.2006
(51) Int. Cl.: B23Q 11/08, B23Q 11/00

(54) **MACHINE TOOL**
WERKZEUGMASCHINE
MACHINE-OUTIL

(30) Priority: 20.12.2005 DK 200501792; 11.04.2006 US 790786 P
(43) Date of publication of application: 10.09.2008
(73) Proprietor: STRUERS A/S, 2750 Ballerup (DK)
(72) Inventor: JEPPESEN, Claus, 2300 Copenhagen S (DK); PERRET-GENTIL, Flemming, 3670 Veksø Sj. (DK)
(74) Representative: Schwarze, Holm
(86) International application number: PCT/DK2006/000687
(87) International publication number: WO 2007/071243

(56) References cited:
- EP-A- 1 101 564
- EP-A- 1 129 793
- US-B1- 6 210 086
- PATENT ABSTRACTS OF JAPAN vol. 2003, no. 09, 3 September 2003 (2003-09-03) & JP 2003 145389 A (TOKYO SEIMITSU CO LTD), 20 May 2003 (2003-05-20) cited in the application

## Description

The present invention relates to a machine tool according to the preamble of claim 1, as known from EP-A-1129793 , and to a method for cleaning such a machine tool.

In many machining tools, such as cutting devices for cutting a workpiece, a considerable amount of cut material - so called scrap or swarf - is produced during operation of the machine. Depending on what kind of material the machine tool operates on, the swarf may include a variety of different materials, e.g. metal, plastic, minerals, etc., or a combination of the above.

During operation on a workpiece, a cutting tool, e.g. a cutting disc, is typically moved relative to a workpiece while the cutting tool is rotated at high speed. Conventionally, the workpiece is secured to a machine table or other workpiece support.

The relative movement may include a movement of a machine head / cutting head to which the cutting tool is attached towards and away from the workpiece, e.g. as to cut into/through the workpiece along a predetermined cutting plane. Alternatively, the relative movement may include a traverse movement of the machine head across the workpiece, e.g. as to remove material from the workpiece in stages, or any other translational movement along a predetermined machine path.

The workpiece support may itself be mounted for movement above a machine bed, e.g. in a plane across the direction of the movement of the cutting tool.

To ensure high quality cutting action, a cutting fluid is conventionally directed to the cutting tool, the workpiece, and/or the interface between the cutting tool and the workpiece, thereby providing lubrication for the cutting action and/or washing cut material from the immediate vicinity of the interface and/or to maintain the temperature of the cutting tool at a preferable low temperature. Hence, the swarf generally may include a mixture of lubricant/coolant and cut material.

Furthermore, during operation, cut/removed material typically falls away from the workpiece onto surfaces of the machine, such as the machine bed or floor, or a protective cover including a cover for protecting the internal machinery of the machine. The generation of swarf may be considerable and, e.g. due to the high rotational speed of the cutting tool, cause a contamination of most of the surfaces surrounding the cutting tool by swarf. Deposited swarf, if not removed, may affect the movable parts of the machine tool, e.g. the movable machine head, a movable machine table, and/or the like, thus reducing the accuracy of subsequent cutting operations, reducing the lifetime of the machine tool, or even cause the machine to malfunction.

Typically, the machine tool includes an enclosure surrounding the machine head and the workpiece support limiting the contamination with swarf to surfaces inside that enclosure. Typically, the enclosure is defined by a machine bed or floor and a protective cover. The protective cover may further be composed of one or more sections, e.g. a fixed rear wall and a movable front and/or top cover that may be opened/removed in order to provide access to the machine tool. Often at least a part of the protective cover is made of a transparent material, e.g. plastic, as to allow visual inspection of the machine process during operation. Consequently, a contamination of the inside surface of the protective cover may impair the visibility through the cover significantly.

As a result of the contamination with swarf, the machine tool requires occasional or even frequent cleaning.

Some known machine tools include a tool change mechanism allowing the automatic exchange of tools. In this connection, it is known to provide cleaning nozzles for dispensing cleaning fluid in the proximity of such a tool change mechanism as to avoid cut material to interfere with the tool change mechanism. However, such cleaning nozzles are designed to clean a rather small portion of the machine tool where adherence of machining chips affects the changing of tools. Examples of such cleaning systems for tool change mechanisms are disclosed in US 6,409,641 and EP 1 495 835.

Nevertheless, for the purpose of a general cleaning of the machine tool, it is desirable to provide a cleaning system that efficiently cleans all of the contaminated surfaces and, in particular, the inside surface of the protective cover of the machine tool.

Japanese patent abstract 2003/145389 discloses a cutting device including a cleaning nozzle mounted at the top inside of a mist cover. After cutting a workpiece, water supplied from a supply tube is delivered to the nozzle and blown from a plurality of holes provided in the nozzle as to wash mist and contaminants deposited inside the mist cover away.

European patent application EP 1 129 793 discloses a machine tool including a cleaning nozzle mounted at the ceiling of the enclosure that encloses the machine head. The nozzle directs cleaning fluid in a downward cone-like jet towards the workpiece.

Even though the above prior art documents describe different cleaning systems for different parts of the machine tool, it remains a problem to provide an efficient cleaning system that provides an efficient general cleaning of most of the contaminated surfaces of a machine tool. Furthermore, due to the often considerable contamination of the various surfaces and parts of a machine tool, it is generally desirable to provide such a cleaning system that is robust and easy to maintain, and thus suitable for the harsh environment inside the enclosure of the machine tool.

The above and other problems are solved by a machine tool comprising:
- a machine head arranged to move between a number of positions, and to perform a machine operation on a workpiece;
- a cleaning nozzle for dispensing a fluid for cleaning at least one surface contaminated by swarf generated during said machine operation;
- a protective cover arranged to at least partially surround said workpiece support and said machine head during operation;
when the cleaning nozzle is mounted to the machine head and arranged to direct a fluid towards at least an inner surface of said protective cover from a number of different positions of the machine head.

In particular, by mounting a cleaning nozzle to the machine head such that the cleaning nozzle directs a fluid towards at least an inner surface of the protective cover from a number of different positions, an efficient cleaning of a large portion of the enclosure of the machine tool is provided. In particular, since the machine head is movable, a large surface may be cleaned even by a small number of nozzles or even by a single nozzle, thereby reducing the complexity of the cleaning system, since the number of cleaning nozzles and supply conduits that need to be maintained and kept free of contaminants is reduced. Furthermore, since the cleaning nozzle is mounted to the machine head, no additional movable parts are required for moving the cleaning nozzle around inside the enclosure, thereby further reducing the complexity of the cleaning system.

In some embodiments, the machine tool is adapted to be operated in a special cleaning mode, in which cleaning mode the machine head is moved along a predetermined path and fluid is dispensed by the cleaning nozzle. When the machine tool is operative to simultaneously move the machine head and dispense fluid through the cleaning nozzle, a particularly fast and efficient cleaning process is provided.

In some embodiments, the machine head includes a tool and a guard member/housing at least partially surrounding the tool, the guard member having an inner surface, proximal to said tool, and an outer surface, distal to said tool; and wherein the cleaning nozzle is mounted to said outer surface of said guard member. Consequently, the cleaning nozzle does not interfere with the tool during operation on the workpiece. Furthermore, the dispensed cleaning fluid during a cleaning operation is efficiently distributed since any blockage of the ejected jet(s) of cleaning fluid by the tool or the guard member is minimized.

When the cleaning nozzle includes a rotatable/spinning spray head/nozzle head for directing a fluid in a plurality of directions, an efficient distribution of cleaning fluid in all directions is provided.

In some embodiments, the machine tool further comprises a cooling nozzle for directing a fluid towards said workpiece and/or a tool operating on said workpiece during said machine operation, thereby providing a cooling and/or lubricating fluid to the workpiece and/or the tool during operation. In some embodiments, the cooling nozzle is arranged on an inner surface of a guard at least partly surrounding the tool.

In some embodiments, the machine tool comprises a fluid source/reservoir for providing a fluid, respective supply conduits for supplying fluid from said fluid source to said cleaning nozzle and a cooling nozzle, and a diverter or directional control valve for selectively directing fluid to either the cooling nozzle or the cleaning nozzle. Hence, a modification of an existing machine tool to include a cleaning system as described herein only involves the addition of a small number of additional components. For example, even though the cleaning system may be provided with its own pump, the cleaning system and the cooling system may conveniently utilise a common pump.

In particular, the valve and the cleaning nozzle may be combined into an integrated cleaning unit that is mounted to or integrated in the machine head and that may be connected to an existing supply conduit for cooling fluid.

As mentioned above, the machine tool may comprise an enclosure for preventing surfaces outside said enclosure from contamination by swarf generated during the machine operation, the enclosure being at least partly defined by said protective cover. When the valve is arranged outside said enclosure, the valve is not exposed to contamination of swarf, thereby allowing the use of less robust components, e.g. an electronically, pneumatically, and/or hydraulically controllable/actuated valve that allows a control of the cleaning system from a control unit for controlling the machine tool.

In some embodiments, the machine tool further comprises a workpiece support, e.g. a support table, for supporting the workpiece, wherein the workpiece support is moveably mounted relative to the machine head, and wherein the machine tool is operatable in a cleaning mode in which the machine head and the workpiece support are moved and fluid is dispensed by the cleaning nozzle. Consequently, an improved cleaning of the workpiece support and any surfaces obstructed by the workpiece support in some positions of the workpiece support is achieved.

The present invention can be implemented in different ways including the machine tool described above and in the following, a cleaning system for a machine tool, and a method for cleaning a machine tool, each yielding one or more of the benefits and advantages described in connection with the first-mentioned machine tool, and each having one or more preferred embodiments corresponding to the preferred embodiments described in connection with the first-mentioned machine tool and/or disclosed in the dependant claims.

In particular, according to one aspect the invention relates to a method for cleaning a machine tool, the machine tool comprising a machine head arranged to move relative to a workpiece to be machined, and to perform a machine operation on a said workpiece; a cleaning nozzle for dispensing a fluid for cleaning at least one surface contaminated by swarf generated during said machine operation; and a protective cover arranged to at least partially surround said workpiece support and said machine head during operation; wherein the cleaning nozzle is mounted to the machine head; the method comprising:
- controlling the machine head to move relative to the workpiece support;
- directing, during movement of said machine head, a fluid from said cleaning nozzle towards at least an inner surface of said protective cover.

The above and other aspects will be apparent and elucidated from the embodiments described in the following with reference to the drawings in which:
Fig. 1 schematically shows an example of a machine tool.
Fig. 2 shows an example of a guard for a cut-off disc.
Fig. 3 shows a schematic block diagram of another example of a machine tool.

In the drawings like reference numbers refer to like or corresponding components, features, entities, etc.

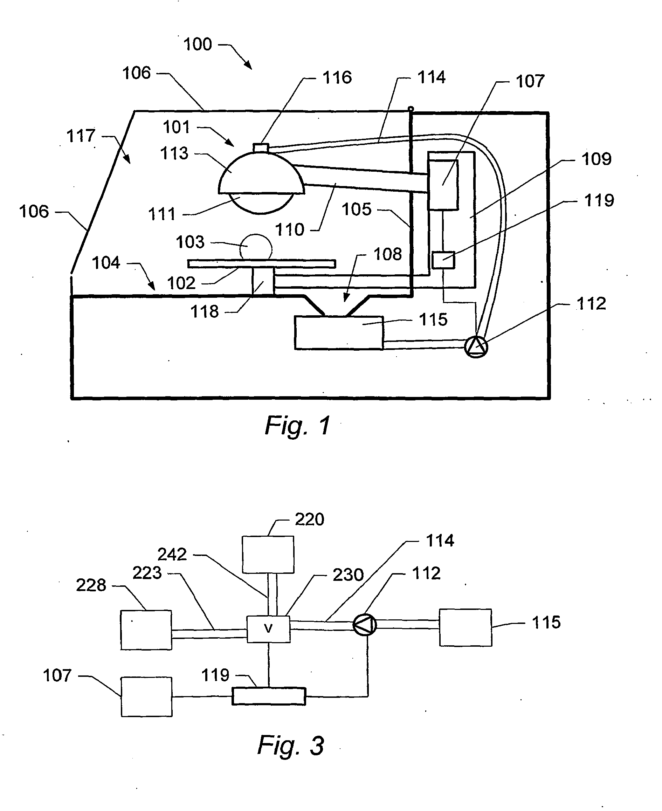

Fig. 1 schematically shows an example of a machine tool for cutting a workpiece. The machine tool, generally designated 100, includes a cutting head 101 and a support table 102 for supporting a workpiece 103.

The machine tool comprises a floor plate 104 above which a machine bed 118 is mounted. Mounted for movement across the machine bed is a workpiece support table 102 to which a workpiece 103 may be secured in a conventional manner, e.g. by a clamping mechanism or the like. In some embodiments, the workpiece support table 102 is provided as an x-y table that is movable along two orthogonal axes in a plane across the cutting plane of the cutting tool. In some embodiments the workpiece support table may further be adjustable in height. In other embodiments, the table may be movable in one direction only, or may even be provided as a stationary table. The movement of the workpiece support table 102 may be performed by a manual adjustment of the position of the workpiece support table, or it may be driven by a suitable drive means, e.g. a motor, such as one or more linear motors.

The workpiece support table 102 is enclosed in a machine chamber/enclosure 117 defined by the floor plate 104 and a protective cover including a rear wall 105 and a protective front cover 106. The rear wall and/or the floor plate separate the machine chamber from a machine control system including a control unit 119, one or more motors 107, as well as possible gears, drives, levers, and/or the like (not explicitly shown). The protective front cover 106 is conventionally constructed as to allow at least a part of the cover to be opened or removed as to allow access to the workpiece. When at least a part of the protective front cover 106 is made from a transparent material, e.g. plastic, the front cover allows a user a visual inspection of the cutting process.

The cutting head 101 is mounted for movement relative to the workpiece support table 102. In the example of fig. 1, the cutting head is shown mounted to an arm 110 projecting into the machine chamber from a column 109 that extends upwardly from the machine bed. Alternatively, the machine head 101 may be mounted to a column including suitable guideways, or in any other suitable way that allows movement of the cutting head relative to the workpiece 103.

The cutting head 101 includes a cutting disc 111 that is rotatably mounted to the cutting head as to allow the cutting disc to rotate at high speed, conventionally driven by a motor 107 of the machine control system, e.g. via a belt or any other suitable drive means. The arm 110 is movably mounted as to allow the cutting disc to be moved towards and away from the workpiece 103 as to perform a cut through the workpiece 103. In some embodiments the cutting head may further be movable in a direction across the workpiece, e.g. in a direction along the cutting plane. Alternatively, the cutting head may be pivotally mounted such that the cutting disc can be moved in an arc.

Hence, in general, the construction of the machine tool will be such that it permits relative movement to take place between the cutting head 101 and the workpiece 103 mounted on the workpiece support table 102. Typically, such relative movements will include movements along at least one, two, or three orthogonal axes. At least a part of the relative movement is performed by a movement of the cutting head 101.

The cutting head 101 further comprises a guard 113 protecting the cutting disc and causing swarf and cooling fluid to predominantly be directed in a downward direction. As will be described in greater detail below, the guard comprises cooling nozzles for dispensing a fluid, in particular a liquid such as water or another coolant and/or lubricant for cooling and/or lubricating the cutting disc 111 and the workpiece 103 during the cutting operation. Examples of such liquids include an oil, an oil/water mixture, a synthetic coolant/lubricant, a synthetic coolant/lubricant mixed with water, and the like. The fluid is pumped through the cooling nozzles by a pump 112 via a supply conduit 114. The dispensed fluid is collected in a fluid tank or reservoir 115 into which the fluid passes through an opening 108 in the floor plate.

The control unit 119 may include any suitable control circuitry, e.g. a suitably programmed microprocessor, configured to control the operation of the machine tool, in particular operation of the motor 107, the motor driving the cutting disc, the pump 112, etc.

During a cutting operation on a workpiece, cut material, typically known and referred to herein as swarf will fall and be sprayed onto the floor plate, the workpiece support table, the machine bed, the rear wall, the protective front cover, and onto other surfaces within the machine chamber. Some of this material will be moved into the fluid tank 115 by the fluid.

The pump 112 pumps the fluid from the fluid reservoir 115 towards the cooling nozzles. Since the fluid collected in the reservoir 115 is contaminated by swarf, the system may further include one or more filters for removing contaminants from the fluid.

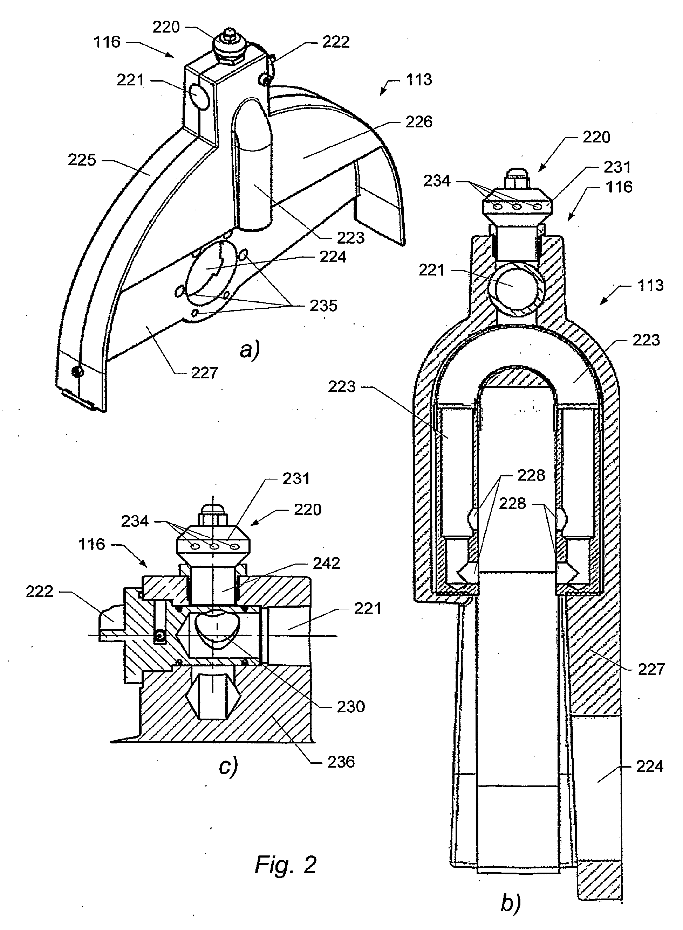

As will now be described in greater detail with reference to fig. 2, the machine tool further includes a cleaning unit 116 mounted on the guard 113 of the cutting head 101.

Fig. 2 shows an example of a guard for a cut-off disc. In particular, fig. 2a shows a perspective view of a guard 113, fig. 2b is a cross-sectional view of the guard 113, and fig. 2c is a cross-sectional view of the cleaning unit 116 mounted on the guard 113.

The guard 113 comprises a circumferential wall 225 and two side walls 226 and 227. The circumferential wall 225 extends along an arc around a center hole 224 and along the circumference of a cutting disc (not shown) when the cutting disc is mounted inside the guard. The sidewalls extend from the circumferential wall on both sides of the cutting disc and in a direction along the plane of the cutting disc. One sidewall 227 comprises mounting holes 235 for mounting the guard 113 to the arm 110, and a hole 224 as to allow a drive shaft (not shown) for the cutting disc to extend through the hole 224 when the guard 113 is mounted to the arm 110 or another tool support member.

The guard 113 further comprises a cleaning unit 116 positioned at the outside surface of the circumferential wall 225, i.e. the surface facing away from the cutting disc. The cleaning unit comprises a housing 236, a diverter valve 230, and a cleaning nozzle 220. The housing 236 may be constructed as a self-contained unit to be mounted on an existing guard, or it may conveniently be integrated into the guard as shown in fig. 2. The housing 236 encloses the diverter valve 230, thereby protecting its mechanical parts from contamination with swarf. The housing 236 includes an inlet 221 for receiving the supply conduit 114 supplying cooling/cleaning fluid to the cleaning unit. The inlet 221 is in fluid communication with the diverter valve 230. The diverter valve 230, e.g. a plug valve, a ball valve, or any other suitable diverter valve, selectively directs the fluid received via the inlet 221 to the cleaning nozzle 220 or a number of cooling nozzles 228. The diverter valve is manually actuated/operated via a turning knob 222 that may be turned between two positions. A manually operated valve has the advantage that it avoids the use of electrical or other complex and sensitive components inside the machine chamber.

The cooling nozzles 228 are positioned at the inner surfaces of side walls 226 and 227 and they are adapted to dispense fluid towards the cutting disc. The cooling nozzles 228 are in fluid communication with the diverter valve 230 via respective conduits 223 that extend along the respective side walls in a radial direction towards the centre axis of the hole 224.

The cleaning nozzle 220 is mounted to the housing 236 and in fluid communication with the diverter valve 230. The cleaning nozzle 220 comprises a rotatable spray head 231 comprising a plurality of individual nozzles 234. In use, the cleaning liquid pumped through the cleaning nozzle 220 turns the spray head by means of the specially positioned nozzles 234, or any other suitable mechanism, e.g. an internal turbine. Hence, in use jets of cleaning/cooling fluid are ejected through the nozzles 234 in different directions away from the spray head 231, causing a rapid-repetition impact of cleaning fluid onto the surrounding surfaces within the machine chamber, thereby loosening and washing off the swarf and dirt attached to these.

Again referring to fig. 1, in use, the machine tool 100 is operatable in a cleaning mode, e.g. controlled according to a cleaning program executed by the machine control system. Conveniently, the cleaning program may be initiated by an operator when desirable, e.g. after completion of a cutting operation.

During the cutting operation, the diverter valve 230 is positioned such that fluid is directed to the cooling nozzles 228, thereby providing coolant to the cutting disc 111 as to maintain a desired temperature of the cutting disc and the interface of the cutting disc and the workpiece. It is understood that the machine tool may include further cooling nozzles, e.g. in the form of flexible hoses, that allow to direct coolant directly towards the workpiece 103.

Before initiating the cleaning process, the diverter valve 230 is operated to direct cleaning fluid to the cleaning nozzle 220 instead. During the cleaning process, the pump 112 is operated manually or under the control of a cleaning program to pump fluid from the reservoir 115 to the cleaning nozzle 220, and the machine control is operated to move the cutting head in a predetermined movement pattern, e.g. by repeating a predetermined movement cycle, such as an up-down movement, preferably covering the entire range of possible movements of the cutting head as to increase the number of relative positions of the cleaning nozzle relative to the various surfaces inside the machine chamber. In some embodiments, where the workpiece support table is motor-driven, the machine control system further controls the workpiece control table to be moved in a predetermined movement pattern, thereby further increasing the range of different relative positions of different surfaces to the cleaning nozzle, and possible exposing surfaces to jets of cleaning fluid which otherwise would be concealed by the workpiece support table or the workpiece. Similarly, if the machine tool includes any further movable items, e.g. additional tools, clamping mechanisms, or the like, these may optionally be operated to be moved as well during the cleaning process.

In an alternative embodiment, the diverter valve may be replaced by a valve in the supply conduit 242 to the cleaning nozzle as to control the flow to the cleaning nozzle. During the cutting operation this valve is closed, and it is opened before initiating the cleaning operation. Hence, in such an embodiment, during the cleaning operation, fluid is dispensed both from the cleaning nozzles and from the cooling nozzles. However, in such a system a larger flow of fluid may be required to supply a sufficient pressure of the jets of cleaning fluid generated by the cleaning nozzles. Furthermore, care should be taken that any additional jets of liquid from cooling nozzles do not intercept the jets of fluid from the cleaning nozzles and thus possibly reduce the effect of the cleaning jets.

In the above a cleaning system with a manually operated diverter valve was described. In the following, an alternative embodiment will be described with reference to fig. 3 based on an electrically actuated valve which thus allows automatic operation of the cleaning process under the control of the machine control system. Alternatively, the valve may be actuated pneumatically, hydraulically or in any other suitable way.

Fig. 3 shows a schematic block diagram of another example of a machine tool with a cleaning system. The machine tool is similar to the one described above and will not be described in detail again. The machine tool comprises one or more cooling nozzles 228, a cleaning nozzle 220 mounted on a movable cutting head of the machine tool. The movable cutting head is driven by a motor 107. The cooling and cleaning nozzles are supplied with cleaning/cooling fluid from a fluid reservoir 115 via a pump 112 that pumps fluid from the reservoir 115 through a supply conduit 114 and a diverter valve 230 to either the cooling nozzle(s) 228 or the cleaning nozzle 220 via respective conduits 223 and 242. The machine tool further comprises a control unit 119 that controls the motor 107, the pump 112, and the diverter valve 230 via respective control lines.

The above-described embodiment thus allows a user, to initiate the cleaning program, e.g. by activating a single button, or by entering a single command via a suitable user interface of the machine control system. The control program thus automatically, activates the diverter valve 230, starts the pump 112 and controls the cutting head to move in a predetermined movement pattern. The control program may continue until stopped by the operator and/or continue for a pre-set time.

This embodiment may be implemented as in the embodiment described in connection with figs. 1 and 2, but with the manually operated valve 230 replaced by an electrically controlled valve. Nevertheless, in an alternative embodiment, the electrically controlled valve is positioned outside the machine chamber 117, e.g. in connection with the motor control system or the pump 112, and the separate supply conduits 223 and 242 extend from the valve into the machine chamber and to the cooling nozzles and the cleaning nozzle, respectively. Hence, in such an embodiment, the electrically controlled valve is not exposed to the harsh environment inside the machine chamber.

Hence, in the above, a cleaning system for a machine tool has been described that efficiently removes swarf from the side walls, the floor plate, the protective front cover and other surfaces upon which the material may accumulate. In particular, the cleaning system avoids the need for any additional removal means in the form of scraper bars, conveyor belts, or the like. Such additional removal means may require additional maintenance, they may be difficult to construct such that they do not interfere with the normal operational movement of the machine parts, and they may even be easily damaged by operational movements of the machine or heavy contamination with swarf or cut material.

Even though in the above embodiments, the guard only includes a single cleaning nozzle, a machine tool may be provided with additional cleaning nozzles, e.g. further cleaning nozzles positioned on the guard or other places on the cutting head. Nevertheless, it has turned out that the placement of the cleaning nozzle on the movable cutting head provides an efficient cleaning of the machine chamber. This is achieved even with a small number of cleaning nozzles, or even with a single cleaning nozzle, because due to the movement of the cutting head during the cleaning operation, cleaning fluid is ejected to the different surfaces of the cleaning chamber from different angles. Furthermore, since the cleaning nozzle is moved around within the machine chamber during the cleaning process, cleaning fluid is ejected towards the respective surfaces from a relative smaller distance, thereby increasing the impact of the cleaning fluid on the surface and thus improving the cleaning action.

Furthermore, in the above embodiments, a single pump is provided that selectively pumps fluid from a common reservoir to either the cleaning or the cooling nozzles. In alternative embodiments, separate pumps may be provided for the cooling and the cleaning system, respectively, thereby avoiding the need for a diverter valve. The separate pumps may pump fluid from a common reservoir to the respective nozzles. Alternatively, a separate reservoir may be provided for fresh cleaning fluid from which the cleaning nozzles are fed. The cooling system may thus utilise the cleaning fluid that is collected/recycled in a reservoir as described above.

It is noted that the invention was mainly described in context with a cutting device for cutting a workpiece. However, it is noted that the invention is not limited to this specific context, and may be utilised generally, eg. in turning, milling, drilling, reaming, grinding, cutting, polishing machines, etc.

## Claims

1. A machine tool comprising:
- a machine head (101) arranged to move between a number of positions, and to perform a machine operation on a workpiece (103);
- a cleaning nozzle (220) for dispensing a fluid for cleaning at least one surface contaminated by swarf generated during said machine operation;
- a protective cover (105,106) arranged to at least partially surround said workpiece and said machine head during operation;
**characterised in that**
the cleaning nozzle (220) is mounted to the machine head (101) and arranged to direct a fluid towards at least an inner surface of said protective cover (105,106) from a number of different positions of the machine head (101).

2. A machine tool according to claim 1, adapted to be operated in a cleaning mode, in which cleaning mode the machine head is moved and fluid is dispensed by the cleaning nozzle.

3. A machine tool according to claim 1 or 2, wherein the machine tool is operative to simultaneously move the machine head and dispense fluid through the cleaning nozzle.

4. A machine tool according to any one of claims 1 through 3, wherein the machine head includes a tool (111) and a guard member (113) at least partially surrounding the tool, the guard member having an inner surface, proximal to said tool, and an outer surface, distal to said tool; and wherein the cleaning nozzle is mounted to said outer surface of said guard member.

5. A machine tool according to any one of claims 1 through 4, wherein the machine tool is a machine tool for cutting workpiece along a cutting plane.

6. A machine tool according to any one of claims 1 through 5, wherein the cleaning nozzle includes a rotatable nozzle (231) for directing a fluid in a plurality of directions.

7. A machine tool according to any one of claims 1 through 6, further comprising a cooling nozzle (228) for directing a fluid towards said workpiece and/or a tool operating on the workpiece during said machine operation.

8. A machine tool according to claim 7, comprising a fluid source (115) for providing a fluid, respective supply conduits (114, 223, 242) for supplying fluid from said fluid source to said cleaning nozzle and said cooling nozzle, and at least one valve (230) for selectively directing fluid to either the cooling nozzle or the cleaning nozzle.

9. A machine tool according to claim 8, comprising a cleaning unit (116) mounted to the machine head, the cleaning unit including the cleaning nozzle and the valve.

10. A machine tool according to claim 8, comprising an enclosure (117) for preventing surfaces outside said enclosure from contamination by swarf generated during the machine operation, the enclosure being at least partly defined by said protective cover; wherein the valve is arranged outside said enclosure.

11. A machine tool according to any one of claims 1 through 10, further comprising a workpiece support for supporting the workpiece during the machine operation, wherein the workpiece support is moveably mounted relative to the machine head, and wherein the machine tool is operatable in a cleaning mode, in which cleaning mode the machine head and the workpiece support are moved and fluid is dispensed by the cleaning nozzle.

12. A method for cleaning a machine tool, the machine tool comprising a machine head (101) arranged to move relative to a workpiece (103) to be machined, and to perform a machine operation on a said workpiece (103), a cleaning nozzle (220) for dispensing a fluid for cleaning at least one surface contaminated by swarf generated during said machine operation; and a protective cover (105,106) arranged to at least partially surround said workpiece support and said machine head (101) during operation; wherein the cleaning nozzle is mounted to the machine head; the method comprising:
- controlling the machine head to move relative to the workpiece support;
- directing, during movement of said machine head, a fluid from said cleaning nozzle towards at least an inner surface of said protective cover.

## Patentansprüche

1. Werkzeugmaschine umfassend:
- einen Maschinenkopf (101), welcher zum Bewegen zwischen einer Anzahl von Positionen und zum Ausführen eines Maschinenvorgangs an einem Werkstück (103) vorgesehen ist;
- eine Reinigungsdüse (220) zur Abgabe eines Fluids zum Reinigen mindestens einer durch während des Maschinenvorgangs erzeugten Schleifstaub verunreinigten Fläche;
- eine Schutzabdeckung (105, 106), welche dazu vorgesehen ist, das Werkstück und den Maschinenkopf während des Vorgangs zumindest teilweise umzugeben;
**dadurch gekennzeichnet, dass**
die Reinigungsdüse (220) am Maschinenkopf (101) montiert ist und dazu vorgesehen ist, ein Fluid gegen mindestens eine Innenfläche der Schutzabdeckung (105, 106) von einer Anzahl von verschiedenen Positionen des Maschinenkopfes (101) zu richten.

2. Werkzeugmaschine nach Anspruch 1, welche zum Betrieb in einer Reinigungsbetriebsart angepasst ist, in welcher Reinigungsbetriebsart der Maschinenkopf bewegt wird und Fluid durch die Reinigungsdüse abgegeben wird.

3. Werkzeugmaschine nach Anspruch 1 oder 2, wobei die Werkzeugmaschine zum gleichzeitigen Bewegen des Maschinenkopfes und zur Abgabe von Fluid durch die Reinigungsdüse betrieben werden kann.

4. Werkzeugmaschine nach einem der Ansprüche 1 bis 3, wobei der Maschinenkopf ein Werkzeug (111) und ein das Werkzeug zumindest teilweise umgebendes Schutzelement (113) umfasst, wobei das Schutzelement eine Innenfläche, proximal des Werkzeuges, und eine Außenfläche, distal des Werkzeuges, aufweist; und wobei die Reinigungsdüse an der Außenfläche des Schutzelementes angeordnet ist.

5. Werkzeugmaschine nach einem der Ansprüche 1 bis 4, wobei die Werkzeugmaschine eine Werkzeugmaschine zum Schneiden eines Werkstücks entlang einer Schneidebene ist.

6. Werkzeugmaschine nach einem der Ansprüche 1 bis 5, wobei die Reinigungsdüse eine drehbare Düse (231) zum Richten eines Fluids in einer Mehrheit von Richtungen umfasst.

7. Werkzeugmaschine nach einem der Ansprüche 1 bis 6, welche ferner eine Kühldüse (228) zum Richten eines Fluids auf das Werkstück und/oder ein während des Maschinenvorgangs am arbeitetendes Werkstück umfasst.

8. Werkzeugmaschine nach Anspruch 7 umfassend eine Fluidquelle (115) zur Abgabe eines Fluids, beziehungsweise Versorgungsleitungen (114, 223, 242) zur Versorgung eines Fluids von der Fluidquelle zu der Reinigungsdüse und der Kühldüse, und mindestens ein Ventil (230) zum wahlweisen Richten eines Fluids auf entweder die Kühldüse oder die Reinigungsdüse.

9. Werkzeugmaschine nach Anspruch 8 umfassend eine am Maschinenkopf montierte Reinigungseinheit (116) umfasst, wobei die Reinigungseinheit die Reinigungsdüse und das Ventil umfasst.

10. Werkzeugmaschine nach Anspruch 8 umfassend eine Einfassung (117) zur Verhinderung von Verunreinigung von Oberflächen außerhalb der Einfassung durch während des Maschinenvorgangs erzeugten Schleifstaub, wobei die Einfassung durch die Schutzabdeckung zumindest teilweise definiert ist; wobei das Ventil außerhalb der Einfassung angeordnet ist.

11. Werkzeugmaschine nach einem der Ansprüche 1 bis 10, welche ferner eine Werkstückunterstützung zum Unterstützen des Werkstücks während des Maschinenvorgangs umfasst, wobei die Werkstückunterstützung relativ zum Maschinenkopf beweglich montiert ist, und wobei die Werkzeugmaschine in einer Reinigungsbetriebsart betrieben werden kann, in welcher Reinigungsbetriebsart der Maschinenkopf und die Werkstückunterstützung bewegt werden und Fluid durch die Reinigungsdüse abgegeben wird.

12. Verfahren zum Reinigen einer Werkzeugmaschine umfassend einen Maschinenkopf (101), welcher zum Bewegen relativ zu einem zu bearbeitenden Werkstück (103) und zum Ausführen eines Maschinenvorgangs am Werkstück (103) vorgesehen ist, eine Reinigungsdüse (220) zur Abgabe eines Fluids zum Reinigen mindestens einer durch während des Maschinenvorgangs erzeugten Schleifstaub verunreinigten Fläche; und eine Schutzabdeckung (105, 106), welche dazu vorgesehen ist, während des Vorgangs die Werkstückunterstützung und den Maschinenkopf (101) zumindest teilweise zu umgeben; wobei die Reinigungsdüse an dem Maschinenkopf montiert ist; welches Verfahren umfasst:
- Steuerung der Bewegung des Maschinenkopfes relativ zur Werkstückunterstützung;
- Richten, während der Bewegung des Maschinenkopfes, eines Fluids von der Reinigungsdüse auf mindestens eine Innenfläche der Schutzabdeckung.

## Revendications

1. Machine-outil, comprenant:
- une tête d'usinage (101) disposée pour se déplacer entre un nombre de positions et pour effectuer une opération d'usinage sur une pièce à usiner (103);
- un gicleur de nettoyage (220) pour distribuer un fluide pour le nettoyage d'au moins une surface contaminée par des copeaux générés pendant ladite opération d'usinage;
- un couvercle de protection (105, 106) disposé pour entourer au moins partiellement ladite pièce à usiner et ladite tête d'usinage pendant l'opération;
**caractérisée en ce que**
le gicleur de nettoyage (220) est monté sur la tête d'usinage (101) et arrangé pour guider un fluide vers au moins une surface interne dudit couvercle de protection (105, 106) depuis un nombre de différentes positions de la tête d'usinage (101).

2. Machine-outil selon la revendication 1, adaptée à être opérée dans un mode de nettoyage, mode de nettoyage dans lequel la tête d'usinage est déplacée, et le fluide est distribuée par le gicleur de nettoyage.

3. Machine-outil selon la revendication 1 ou 2, où la machine-outil peut être opérée de sorte qu'elle puisse simultanément déplacer la tête d'usinage et distribuer le fluide par le gicleur de nettoyage.

4. Machine-outil selon l'une quelconque des revendications 1 à 3, dans laquelle la tête d'usinage comprend un outil (111) et un élément de protection (113) entourant au moins partiellement l'outil, l'élément de protection ayant une surface interne, proximale audit outil, et une surface extérieure, distale audit outil; et dans laquelle le gicleur de nettoyage est monté sur ladite surface extérieure dudit élément de protection.

5. Machine-outil selon l'une quelconque des revendications 1 à 4, où la machine-outil est une machine-outil pour découper la pièce à usiner le long d'un plan de coupe.

6. Machine-outil selon l'une quelconque des revendications 1 à 5, où le gicleur de nettoyage comprend un gicleur rotatif (231) pour guider un fluide dans une pluralité de directions.

7. Machine-outil selon l'une quelconque des revendications 1 à 6, comportant en outre un gicleur de refroidissement (228) pour guider un fluide vers ladite pièce à usiner et/ou un outil opérant sur la pièce à usiner pendant ladite opération d'usinage.

8. Machine-outil selon la revendication 7, comprenant une source de fluide (115) pour fournir un fluide, des conduits d'alimentation (114, 223, 242) respectifs pour alimenter du fluide de ladite source de fluide audit gicleur de nettoyage et audit gicleur de refroidissement, et au moins une soupape (230) pour guider sélectivement le fluide vers le gicleur de refroidissement ou le gicleur de nettoyage.

9. Machine-outil selon la revendication 8, comprenant une unité de nettoyage (116) montée sur la tête d'usinage, l'unité de nettoyage comprenant le gicleur de nettoyage et la soupape.

10. Machine-outil selon la revendication 8, comprenant une enceinte (117) pour empêcher des surfaces à l'extérieur de ladite enceinte d'être contaminées par des copeaux générés pendant l'opération d'usinage, l'enceinte étant au moins partiellement définie par ledit couvercle de protection; où la soupape est arrangée en dehors de ladite enceinte.

11. Machine-outil selon l'une quelconque des revendications 1 à 10, comportant en outre un support de pièce pour supporter la pièce à usiner pendant l'opération de la machine, dans laquelle le support de pièce est monté de manière mobile et relativement à la tête d'usinage, et où la machine-outil peut être opérée dans un mode de nettoyage, mode de nettoyage dans lequel la tête d'usinage et le support de pièce sont déplacés, et le fluide est distribué par le gicleur de nettoyage.

12. Procédé pour le nettoyage d'une machine-outil, la machine-outil comprenant une tête d'usinage (101) arrangée pour se déplacer relativement à une pièce à usiner (103), et de réaliser une opération d'usinage sur ladite pièce à usiner (103); un gicleur de nettoyage pour distribuer un fluide pour le nettoyage d'au moins une surface contaminée par des copeaux générés pendant ladite opération d'usinage; et un couvercle de protection (105, 106) disposé pour entourer au moins partiellement ledit support de pièce et ladite tête d'usinage (101) pendant l'opération; où le gicleur de nettoyage est montée sur la tête d'usinage; le procédé comprenant:
- commander la tête d'usinage à se déplacer par rapport au support de pièce;
- guider, pendant le mouvement de ladite tête d'usinage, un fluide dudit gicleur de nettoyage vers au moins une surface interne dudit couvercle de protection.
